(19) Europäisches Patentamt
European Patent Office
Office européen des brevets

(11) **EP 3 237 784 B1**

(12) **EUROPÄISCHE PATENTSCHRIFT**

(45) Veröffentlichungstag und Bekanntmachung des Hinweises auf die Patenterteilung:
**31.07.2019 Patentblatt 2019/31**

(21) Anmeldenummer: **15795194.8**

(22) Anmeldetag: **18.11.2015**

(51) Int Cl.:
*F16L 3/237* *(2006.01)*     *G01F 1/84* *(2006.01)*
*G01N 9/00* *(2006.01)*

(86) Internationale Anmeldenummer:
**PCT/EP2015/076919**

(87) Internationale Veröffentlichungsnummer:
**WO 2016/102122 (30.06.2016 Gazette 2016/26)**

(54) **CORIOLIS-MASSEDURCHFLUSSMESSGERÄT BZW. DICHTEMESSGERÄT**

CORIOLIS MASS FLOWMETER OR DENSITY METER

DÉBITMÈTRE MASSIQUE OU DENSIMÈTRE À FORCE DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 DE 102014119427**
**18.05.2015 DE 102015107769**

(43) Veröffentlichungstag der Anmeldung:
**01.11.2017 Patentblatt 2017/44**

(73) Patentinhaber: **Endress+Hauser Flowtec AG**
**4153 Reinach (CH)**

(72) Erfinder:
• **ZHU, Hao**
**85354 Freising (DE)**
• **RIEDER, Alfred**
**84032 Landshut (DE)**
• **BITTO, Ennio**
**CH-4147 Aesch (CH)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 2 559 976        EP-A2- 1 529 997**
**WO-A1-2007/057385   WO-A1-2009/014871**
**WO-A1-2013/149817   WO-A1-2014/172115**
**US-A- 5 370 002        US-A1- 2012 255 369**

**Beschreibung**

Die vorliegende Erfindung betrifft ein Coriolis-Massedurchflussmessgerät bzw. Dichtemessgerät (im folgenden CMD) mit mindestens zwei in der Ruhelage gebogen verlaufenden Messrohren, mindestens einer Aktuatoranordnung und mindestens einer Sensoranordnung;

einlaufseitig und auslaufseitig jeweils einem Sammler, wobei die Messrohre jeweils einlaufseitig und auslaufseitig mit einem Sammler strömungstechnisch zusammengefasst sind, wobei die einlaufseitigen und auslaufseitigen Sammler derart stabil ausgestaltet sind, dass sie jeweils die Funktion einer Knotenplatte erfüllen; einem Trägerkörper, welcher den einlaufseitigen Sammler und den auslaufseitigen Sammler starr mit einander verbindet; und einlaufseitig und auslaufseitig jeweils mindestens einem, insbesondere zwei oder mehr Kopplern, wobei die Messrohre mittels der Koppler paarweise miteinander verbunden sind, um einen Oszillator zu bilden, wobei die Koppler in Richtung der Messrohrachsen zueinander und zum Sammler beabstandet angeordnet sind, wobei die Koppler jeweils zwei Rohröffnungen für die durch die Koppler verbundenen Messrohre aufweisen, durch welche die Messrohre geführt sind, wobei die Messrohre entlang ihres Umfangs zumindest abschnittsweise mit den Kopplern verbunden sind, wobei die Aktuatoranordnung dazu eingerichtet ist, einen Biegeschwingungsnutzmode zwischen den beiden Messrohren des Oszillators anzuregen, die Sensoranordnung dazu eingerichtet ist, Schwingungen des Oszillators zu erfassen.

Die Resonanzfrequenz dieses Biegeschwingungsnutzmodes ist ein Maß für die Dichte eines die Messrohre durchströmenden Mediums. Die Phasendifferenz zwischen den zwei Sensorsignalen der Sensoranordnung ist abhängig vom Massedurchfluß.

Gattungsgemäße CMD sind beispielsweise in DE 10 2011 006 971 A1, in DE 102011 006 919A1, in US 2013/0319134 A1, in US 8,281,668 B2 und in US 6,415,668 B1 sowie in US 5,370,002 und US 2015/0033874 A1 offenbart. Allgemein dienen die Koppler dazu, um durch die Kopplung der Messrohre einen Oszillator mit definierten Schwingungseigenschaften zu bilden. Die internationale Veröffentlichung WO 2013149817 A1 offenbart ein gattungsgemäßes CMD, mit jeweils mindestens zwei einlassseitigen und auslassseitigen Kopplern, wobei jeweils zumindest ein Koppler eine schlitzförmige Öffnung aufweist, in dem eine Schraube positioniert ist, um eine Ziel-Eigenfrequenz des Oszillators einzustellen.

Untersuchungen von gattungsgemäßen CMD im Zusammenhang mit der vorliegenden Erfindung haben ergeben, dass die Vibrationen von deren Oszillatoren noch Schwingungsenergie an die Umgebung, insbesondere eine angeschlossene Fluidleitung dissipieren. Umgekehrt können auf dem gleichen Weg, störende Schwingungen in den Oszillator eingekoppelt werden.

Beide Effekte können die Leistungsfähigkeit eines CMD erheblich beeinträchtigen.

Es ist daher die Aufgabe der vorliegenden Erfindung, ein CMD bereitzustellen, bei welchem die obigen Störeffekte gelindert bzw. vermieden sind.

Das erfindungsgemäße CMD umfasst mindestens zwei in der Ruhelage gebogen verlaufende Messrohre, wobei die Messrohre Messrohrachsen aufweisen, welche spiegelsymmetrisch zu einer ersten Spiegelebene verlaufen, die sich zwischen den Messrohren erstreckt, mindestens eine Aktuatoranordnung und mindestens eine Sensoanordnung; einlaufseitig und auslaufseitig jeweils einen Sammler, wobei die Messrohre jeweils einlaufseitig und auslaufseitig mit einem Sammler strömungstechnisch zusammengefasst sind, einen Trägerkörper, welcher den einlaufseitigen Sammler und den auslaufseitigen Sammler starr mit einander verbindet; und einlaufseitig und auslaufseitig jeweils mindestens einen ersten plattenförmigen Koppler und einen zweiten plattenförmigen Koppler; wobei die Messrohre mittels der Koppler paarweise miteinander verbunden sind, um einen Oszillator zu bilden, wobei die Koppler jeweils zwei Rohröffnungen für die durch die Koppler verbundenen Messrohre aufweisen, durch welche die Messrohre geführt sind, wobei die Messrohre entlang ihres Umfangs zumindest abschnittsweise mit den Kopplern verbunden sind, wobei die Aktuatoranordnung dazu eingerichtet ist, einen Biegeschwingungsnutzmode zwischen den beiden Messrohren des Oszillators anzuregen, die Sensoranordnung dazu eingerichtet ist, Schwingungen des Oszillators zu erfassen, wobei einlassseitig und auslassseitig jeweils zumindest der erste Koppler und der zweite Koppler, zwischen den durch den Koppler verbundenen Messrohren eine durch einen geschlossenen Rand umgebene Öffnung zum Beeinflussen der Schwingungseigenschaften des Oszillators aufweist, wobei einlassseitig und auslassseitig jeweils ein erster der Koppler und ein zweiter der Koppler kopplerspezifische Kopplernormalenebenen aufweisen, die jeweils parallel zur größten Hauptträgheitsachse des jeweiligen Kopplers verlaufen, die senkrecht zur ersten Spiegelebene verlaufen, und die eine senkrecht zur ersten Spiegelebene verlaufende Verbindungslinie der Messrohrachsen innerhalb der Öffnung des jeweiligen Kopplers berühren, wobei der erste Koppler einen ersten Masseschwerpunkt aufweist, der von seiner kopplerspezifischen Kopplernormalenebene um einen ersten Abstand beabstandet ist, wobei der zweite Koppler einen ersten Masseschwerpunkt aufweist, der von seiner kopplerspezifischen Kopplernormalenebene um einen zweiten Abstand beabstandet ist, wobei erfindungsgemäß der erste Abstand von dem zweiten Abstand abweicht, wobei die Abweichung nicht weniger als 5% insbesondere nicht weniger als 10% des kleineren der beiden Abstände beträgt.

Die Koppler sind einlass- und auslassseitig zum Sammler beabstandet angeordnet.

Es sind einlass- und auslassseitig mehrere Koppler vorhanden, welche in Richtung der Messrohrachsen zueinander beabstandet angeordnet sind.

Mittels geeigneter Positionierung der plattenförmigen Koppler kann die Querempfindlichkeit gegenüber Vibrationen aus der Umgebung bzw. das Dissipieren von Schwingungsenergie an die Umgebung, insbesondere an eine angeschlossene Fluidleitung bereits zu einem gewissen Grad reduziert werden. Da aber verschiedene Wechselwirkungsmechanismen vorhanden sind, die einerseits Kräfte und andererseits Momente umfassen, welche an den einlass- und auslassseitigen Sammlern wirken, lassen sich beide nicht über nur einen Kontrollparameter, wie die Position der Koppler optimal minimieren bzw. Hier bieten die Öffnungen, die auch als Stimmöffnung bezeichnet werden können, zusätzliche Freiheitsgrade mit dem sich die störenden Wechselwirkungsmechanismen weitgehend eliminieren lassen.

In einer Weiterbildung der Erfindung weisen die Öffnungen in der ersten Spiegelebene eine Erstreckung von mindestens 30%, beispielsweise mindestens 50%, und insbesondere mindestens 75% des Durchmessers der Messrohre auf.

In einer Weiterbildung der Erfindung weisen die Öffnungen in der ersten Spiegelebene eine Länge auf deren Quadrat nicht weniger als das Doppelte beispielsweise nicht weniger als das Vierfache und insbesondere nicht weniger als das Achtfache der Fläche der Öffnung beträgt.

In einer Weiterbildung der Erfindung beträgt der Abstand der Messrohrachsen an der Position der Öffnung nicht mehr als 1,5 Außendurchmesser der Messrohre insbesondere nicht mehr als 1,3 Außendurchmesser und bevorzugt nicht mehr als 1,2 Außendurchmesser.

In einer Weiterbildung der Erfindung weist mindestens ein Koppler in der jeweiligen Kopplerebene eine konvexe Hülle auf, deren Fläche nicht mehr als das Fünffache, insbesondere nicht mehr als das Viereinhalbfache, insbesondere nicht mehr als das Vierfache der äußeren Fläche eines Messrohrquerschnitts beträgt.

Erfindungsgemäß weisen einlassseitig und auslassseitig jeweils mindestens zwei Koppler eines durch die Koppler verbundenen Messrohrpaars eine solche Öffnung auf.

In einer Weiterbildung der Erfindung weisen einlassseitig und auslassseitig jeweils zumindest die beiden inneren Koppler eines durch die Koppler verbundenen Messrohrpaars eine solche Öffnung auf, wobei die beiden inneren Koppler, die am weitesten vom jeweiligen Sammler entfernten Koppler sind.

In einer Weiterbildung der Erfindung ist die mindestens eine Öffnung im Wesentlichen symmetrisch zur ersten Spiegelebene.

In einer Weiterbildung der Erfindung ist einlassseitig und auslassseitig jeweils die Öffnung mindestens eines Kopplers bezogen auf eine kopplerspezifische Kopplernormalenebene asymmetrisch, wobei die Kopplernormalenebene parallel zur größten Hauptträgheitsachse des Kopplers verläuft, senkrecht zur ersten Spiegelebene verläuft, und eine senkrecht zur ersten Spiegelebene verlaufende Verbindungslinie der Messrohrachsen innerhalb der Öffnung berührt.

In einer Weiterbildung der Erfindung ist der Abstand der äußersten Erstreckung der mindestens einen Öffnung in der ersten Spiegelebene von der Kopplernormalenebene auf einer ersten Seite der Kopplernormalenebene geringer ist als auf einer zweiten Seite der Kopplernormalenebene.

In einer Weiterbildung der Erfindung ist der Abstand zwischen der äußersten Erstreckung der Öffnung in der ersten Spiegelebene und der äußersten Erstreckung des Kopplers in der ersten Spiegelebene auf einer ersten Seite der Kopplernormalenebene geringer als auf einer zweiten Seite der Kopplernormalenebene.

In einer Weiterbildung der Erfindung weist einlassseitig und auslassseitig jeweils mindestens ein Koppler einen Masseschwerpunkt auf, der von der Kopplernormalenebene um einen Abstand entfernt ist, wobei der Abstand beispielsweise nicht weniger als 4%, insbesondere nicht weniger als 8% des Abstands der Messrohrachsen in der Kopplernormalenebene beträgt.

In einer Weiterbildung der Erfindung weist einlassseitig und auslassseitig jeweils mindestens ein Koppler einen Flächenschwerpunkt einer minimalen konvexen Einhüllenden auf, der von einer Kopplernormalenebene um einen Abstand entfernt ist, wobei der Abstand beispielsweise nicht weniger als 4%, insbesondere nicht weniger als 8% des Abstands der Messrohrachsen in der Kopplernormalenebene beträgt.

Erfindungsgemäß weisen einlassseitig und auslassseitig jeweils ein erster Koppler und ein zweiter Koppler kopplerspezifische Kopplernormalenebenen auf, die jeweils parallel zur größten Hauptträgheitsachse des jeweiligen Kopplers verlaufen, die senkrecht zur ersten Spiegelebene verlaufen, und die eine senkrecht zur ersten Spiegelebene verlaufende Verbindungslinie der Messrohrachsen innerhalb der Öffnung des jeweiligen Kopplers berühren, wobei der erste Koppler einen ersten Masseschwerpunkt aufweist, der von seiner kopplerspezifischen Kopplernormalenebene um einen zweiten Abstand beabstandet ist, wobei der zweite Koppler einen ersten Masseschwerpunkt aufweist, der von seiner kopplerspezifischen Kopplernormalenebene um einen zweiten Abstand beabstandet ist, wobei der erste Abstand von dem zweiten Abstand abweicht, wobei die Abweichung beispielsweise nicht weniger als 5%, insbesondere nicht weniger als 10% des kleineren der beiden Abstände beträgt.

In einer Weiterbildung der Erfindung weisen einlassseitig und auslassseitig jeweils ein erster Koppler und ein zweiter Koppler kopplerspezifische Kopplernormalenebenen auf, die jeweils parallel zur größten Hauptträgheitsachse des jeweiligen Kopplers verlaufen, die senkrecht zur ersten Spiegelebene verlaufen, und die eine senkrecht zur ersten Spiegelebene verlaufende Verbindungslinie der Messrohrachsen innerhalb der Öffnung des jeweiligen Kopplers berühren, wobei einlassseitig und auslassseitig jeweils ein erster Koppler einen ersten Flächenschwerpunkt einer minimalen konvexen Einhüllenden und ein zweiter Koppler einen zweiten einen zweiten Flächenschwerpunkt einer minimalen konvexen Einhüllenden aufweisen, wobei der erste Flächenschwerpunkt von seiner kopplerspezifischen Kopplernormalenebene um einen ersten Abstand beabstandet ist, wobei zweite Flächenschwerpunkt, der von seiner kopplerspezifischen Kopplernormalenebene um einen zweiten Abstand beabstandet ist, wobei der erste Abstand von dem zweiten Abstand abweicht, wobei die Abweichung beispielsweise nicht weniger als 5%, insbesondere nicht weniger als 10% des kleineren der beiden Abstände beträgt.

In einer Weiterbildung der Erfindung weisen einlassseitig und auslassseitig jeweils ein erster Koppler und ein zweiter Koppler kopplerspezifische Kopplernormalenebenen auf, die jeweils parallel zur größten Hauptträgheitsachse des jeweiligen Kopplers verlaufen, die senkrecht zur ersten Spiegelebene verlaufen, und die eine senkrecht zur ersten Spiegelebene verlaufende Verbindungslinie der Messrohrachsen innerhalb der Öffnung des jeweiligen Kopplers berühren, wobei der erste Koppler eine erste Öffnung aufweist, wobei der zweite Koppler eine zweite Öffnung aufweist, und wobei sich die erste Öffnung von der zweiten Öffnung in mindestens einem der folgenden Parameter unterscheidet: Fläche der Öffnung, Länge der Öffnung, Abstand des Flächenschwerpunkts der Öffnung zur jeweiligen Kopplernormalenebene.

Die zuvor beschriebenen Symmetrieabweichungen der plattenförmigen Koppler bzw. der Öffnungen sind weitere Freiheitsgrade, die zur Optimierung der Oszillatoreigenschaften genutzt werden, wobei, wie eingangs erwähnt, die Minimierung der Querempfindlichkeiten zu Vibrationen aus der Umgebung im Zentrum der Aufmerksamkeit stehen. Durch die genannten Symmetrieabweichungen lassen sich zudem die mechanischen Spannungen, welche am Oszillator, insbesondere an den Messrohren und den Kopplern auftreten minimieren, was wiederum zur Langzeitstabilität und damit zur Reproduzierbarkeit der Messwerte beiträgt.

In einer Weiterbildung der Erfindung ist jeweils einlassseitig und auslassseitig mindestens eine Öffnung durch Randabschnitte begrenzt, die in einem Abschnitt zwischen den Messrohren beidseitig durch die Messrohre gebildet sind.

In einer Weiterbildung der Erfindung weisen die durch die Messrohre gebildeten Randabschnitte senkrecht zur größten Hauptträgheitsachse des jeweiligen Kopplers jeweils eine Länge auf, die nicht weniger als 10%, insbesondere nicht weniger als 20% und bevorzugt nicht weniger als 30% des Radius des Messrohrs beträgt, welches den jeweiligen Randabschnitt der Öffnung bildet

Tatsächlich treten bei herkömmlichen Kopplern im Bereich zwischen den Messrohren Spannungsmaxima auf. Wenn die Messrohre dort mit den Kopplern gefügt sind. Wenn die Messrohre nun gemäß der Weiterbildung der Erfindung einen Randabschnitt der Öffnung bilden, bedeutet dies, dass sie in diesem Randabschnitt eine freie Mantelfläche aufweisen, wodurch die mechanischen Spannungsspitzen in diesem Bereich erheblich verringert sind.

Die Koppler des erfindungsgemäßen CMD ermöglichen es, das Auskoppeln von Schwingungsenergie aus dem CMD bzw. das Einkoppeln von störenden Schwingungen aus einer Rohrleitung, in welche das CMD eingebaut ist, zu unterdrücken. Dieses Unterdrücken ist dann besonders wirksam, wenn einlassseitig und auslassseitig jeweils zwei Koppler mit Öffnungen vorgesehen sind. Insbesondere dann, wenn die Koppler hinreichend steif gestaltet sind, wird auch das Übertragen solcher Schwingungskomponenten von den Messrohren zu den Sammlern unterdrückt, die zwar aufgrund von Symmetrieeffekten nur geringfügig zum Auskoppeln von Schwingungsenergie beitragen, die aber dennoch oszillierende Spannungen an den Verbindungen zwischen den Messrohren und den Sammlern bewirken. Derartige oszillierende Spannungen könnten langfristig zu Schäden an den genannten Verbindungen führen, was mit einem Leckagerisiko einhergeht. Insofern weist der das erfindungsgemäße CMD aufgrund der Minimierung dieser oszillierenden Spannungen auch ein reduziertes Ausfallrisiko aufgrund von Leckage auf. Bei einer gegebenen Materialstärke und einer gegebenen Öffnungslänge kann eine hinreichend hohe Steifigkeit der Koppler durch eine kleine Öffnungsfläche erreicht werden.

In einer Weiterbildung der Erfindung weisen die plattenförmigen Koppler eine Materialstärke auf, die nicht mehr als das Vierfache, insbesondere nicht mehr als das Dreifache der Wandstärke der Messrohre beträgt.

Die Messrohre weisen gemäß einer Weiterbildung der Erfindung einen metallischen Werkstoff auch, insbesondere Edelstahl. Die Koppler und oder die Sammler umfassen jeweils einen hinsichtlich der Wärmeausdehnungskoeffizienten kompatiblen Werkstoff, insbesondere den gleichen metallischen Werkstoff.

Das erfindungsgemäße CMD kann ein Paar, zwei Paare oder mehr Paare von gekoppelten Messrohren umfassen, wobei insbesondere jedes Paar von der gekoppelten Messrohren des CMD gemäß der obigen Beschreibung für ein Messrohrpaar gestaltet ist.

In einer Weiterbildung der Erfindung weist das CMD einlassseitig und auslassseitig jeweils einen Sammler auf in dem die Messrohre zweier Messrohrpaare des CMD, strömungstechnisch zusammengefasst sind.

In einer Weiterbildung der Erfindung ist die erste Spiegelebene des ersten Messrohrpaares zugleich die erste Spiegelebene eines zweiten Messrohrpaares des erfindungsgemäßen CMD.

Die Erfindung wird anhand der in den Zeichnungen dargestellten Ausführungsbeispiele erläutert. Es zeigen:

Fign. 1a bis 1c:    Skizzen eines zur Erläuterung einiger geometrischer Begriffe zur Beschreibung der Erfindung;

Fig. 1d:    Ein Koordinatensystem zur Beschreibung der Erfindung

Fig. 2a:    eine schematische Darstellung eines Details eines CMD, zur Erläuterung der Problemstellung der vorliegenden Erfindung;

Fig. 2b:    ein schematisches Diagramm zur Erläuterung des Einflusses einer Kopplerposition auf eine Zielfunktion des CMD-Designs;

Fig. 2c:    ein schematisches Diagramm zur Erläuterung des Einflusses der Öffnungslänge auf eine Zielfunktion des CMD-Designs;

Fig. 3a:    ein erstes Ausführungsbeispiel eines Kopplers eines erfindungsgemäßen CMD;

Fig. 3b:    ein zweites Ausführungsbeispiel eines Kopplers eines erfindungsgemäßen CMD;

Fig. 3c    ein drittes Ausführungsbeispiel eines Kopplers eines erfindungsgemäßen CMD;

Fig. 3d    ein viertes Ausführungsbeispiel eines Kopplers eines erfindungsgemäßen CMD;

Fig. 3e    ein fünftes Ausführungsbeispiel eines Kopplers eines erfindungsgemäßen CMD;

Fig. 4a:    Simulationsergebnisse der mechanischen Spannungsverteilungen in den Kopplern eines CMD nach dem Stand der Technik;

Fig. 4b:    Simulationsergebnisse der mechanischen Spannungsverteilungen in den Kopplern eines ersten Ausführungsbeispiels eines erfindungsgemäßen CMD;

Fig. 4c:    Simulationsergebnisse der mechanischen Spannungsverteilungen in den Kopplern eines zweiten Ausführungsbeispiels eines erfindungsgemäßen CMD;

Fig. 4d:    Simulationsergebnisse der mechanischen Spannungsverteilungen in den Messrohren eines CMD nach dem Stand der Technik;

Fig. 4e:    Simulationsergebnisse der mechanischen Spannungsverteilungen in den Messrohren eines Ausführungsbeispiels eines erfindungsgemäßen CMD;

Fig. 5a:    eine vereinfachte perspektivische Gesamtansicht eines Ausführungsbeispiels eines erfindungsgemäßen CMD;

Fig. 5b:    ein Detail der Ansicht aus Fig. 5a; und

Fig. 5c:    eine vereinfachte Seitenansicht des Ausführungsbeispiels eines erfindungsgemäßen CMD aus Fign 5a und 5b.

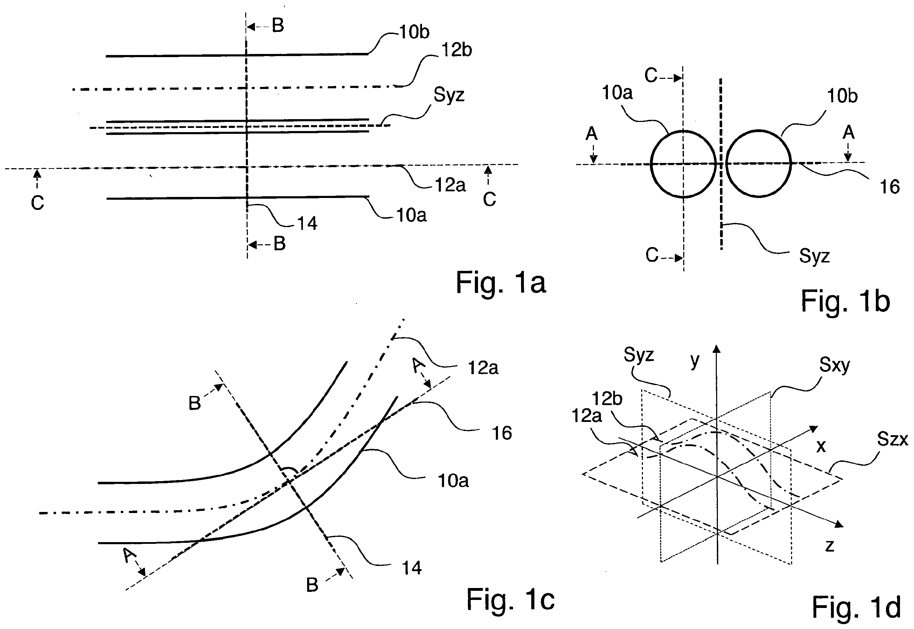

Zunächst werden einige der im Folgenden verwendeten geometrischen Begriffe anhand von Fign. 1a, 1b, 1c und 1d erläutert.

In Fig. 1a ist eine Aufsicht auf einen Abschnitt zweier parallel verlaufender Messrohre 10a, 10b eines CMD. Eine entsprechende Querschnittsansicht entlang der Linie B-B aus Fig. 1a ist in Fig. 1b dargestellt, während Fig. 1c einen Längsschnitt durch eines der Messrohre 10a entlang der Linie C-C aus Fig. 1a darstellt. Die die Messrohre 10a, 10b weisen jeweils eine Messrohrachse 12a, 12b auf, welche entlang des Verlaufs der Messrohre jeweils durch die Mittelpunkte von Rohrquerschnitten minimaler Querschnittsfläche definiert sind. Die Messrohrachsen verlaufen symmetrisch zu einer ersten Spiegelebene Syz, die zwischen den Messrohrachsen 12a, 12b verläuft.

Jede Messrohrachse 10a, 10b für sich verläuft symmetrisch zu einer zweiten Spiegelebene Sxy, welche senkrecht zur ersten Spiegelebene Syz, verläuft. Die Schnittlinie zwischen der ersten Spiegelebene Syz und der zweiten Spiegelebene definiert die Y-Achse eines Koordinatensystems zur Beschreibung des CMD. Eine dritte Ebene Szx verläuft senkrecht zur ersten und zweiten Spiegelebene. Bei einem Zweirohr-CMD mit gebogenen Messrohren, ist diese Ebene keine Spiegelebene. Insofern ist die Festlegung der Position der dritten Ebene, wodurch der Nullpunkt der Y-Achse festgelegt ist, willkürlich. Die erfindungsgemäßen CMD weisen einlaufseitig und auslaufseitig jeweils einen Sammler auf, welcher gewöhnlich einen Prozessanschlussflansch mit einer im wesentlichen axialsymmetrischen Anschlussfläche umfasst, deren Symmetrieachse mit der Z-Achse zusammen fällt. Die dritte Ebene Szx schneidet die erste Spiegelebene Syz entlang der Z-Achse. Dem entsprechend schneidet die dritte Ebene Szx die zweite Spiegelebene Sxy entlang der X-Achse.

Die Messrohre 10a, 10b sind erfindungsgemäß paarweise durch plattenförmige Koppler verbunden, die in Fign. 1a bis 1c nicht dargestellt sind. Die jeweilige maximale Hauptträgheitsachse eines Kopplers, also jene mit dem größten Trägheitsmoment, verläuft senkrecht zu einer Kopplerebene 14, in welcher der Masseschwerpunkt der Koppler liegt. Die Kopplerebene 14 kann eine Normalenebene zu den Messrohrachsen sein, dies ist jedoch nicht zwingend erforderlich. Die maximale Hauptträgheitsachse verläuft parallel zur ersten Spiegelebene Syz und liegt insbesondere in der ersten Spiegelebene.

Senkrecht zur ersten Spiegelebene Syz und senkrecht zur Kopplerebene 14 verläuft eine kopplerspezifische Kopplernormalenebene16, in welcher die Kopplerebene 14 und eine Verbindungslinie der Messrohrachsen 12a, 12b zusammen fallen.

Die Anregung der Messrohre erfolgt gewöhnlich in X-Richtung, und zwar insbesondere mit einem Aktuator, welcher in der zweiten Spiegelebene Sxy angeordnet ist.

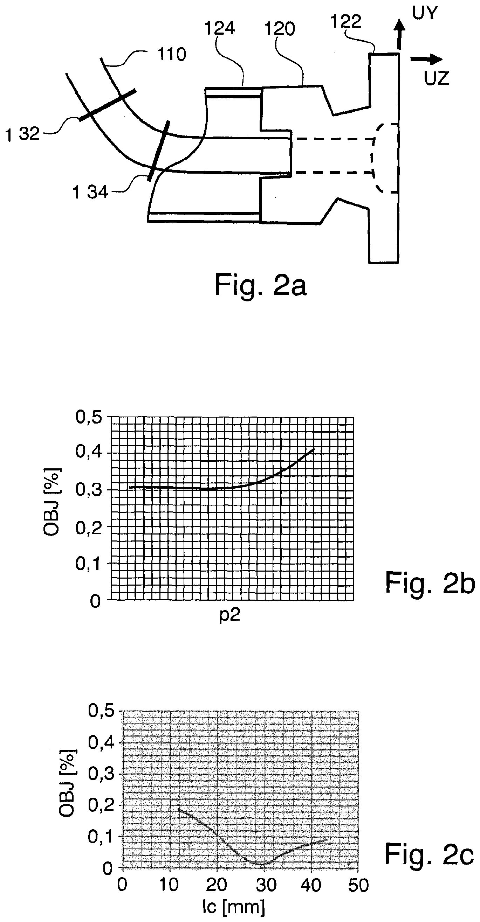

Das der Erfindung zugrundeliegende Problem wird nun kurz anhand von Fig. 2a dargestellt, welche einen einlassseitigen bzw. auslassseitigen Endabschnitt eines CMD 100 in Seitenansicht zeigt. Die Messrohre 110 münden in einen Sammler 120, welcher mit einem Flansch 122 verbunden ist, dessen Stirnfläche zum Anschluss des CMD 100 an eine Rohrleitung dient. Die Messrohre 110 sind paarweise mittels eines inneren Kopplers 132 und eines äußeren Kopplers 134 verbunden. Der Sammler 120 ist über einen starren Trägerkörper 124 mit einem (nicht dargestellten) zweiten Sammler am anderen Endabschnitt des CMD 100 verbunden, um Relativbewegungen der Sammler zueinander zu unterdrücken.

Wie durch die Pfeile UY und UZ angedeutet, bewirken jedoch die Oszillationen der Messrohre, welche in X-Richtung, also in der Darstellung von Fig. 2a senkrecht zur Zeichenebene angeregt werden, eine gekoppelte Bewegungen der Sammler 120 bzw. der damit verbundenen Flansche 122. Diese Bewegungen können die Leistungsfähigkeit des Messgerätes beeinträchtigen und sind daher zu minimieren.

Eine zu minimierende Zielfunktion OBJ zur Bewertung des Erfolgs ist beispielsweise:

$$OBJ = \frac{1}{U_s}\sqrt{\frac{\int |\vec{U}|^2 dA}{A}}$$

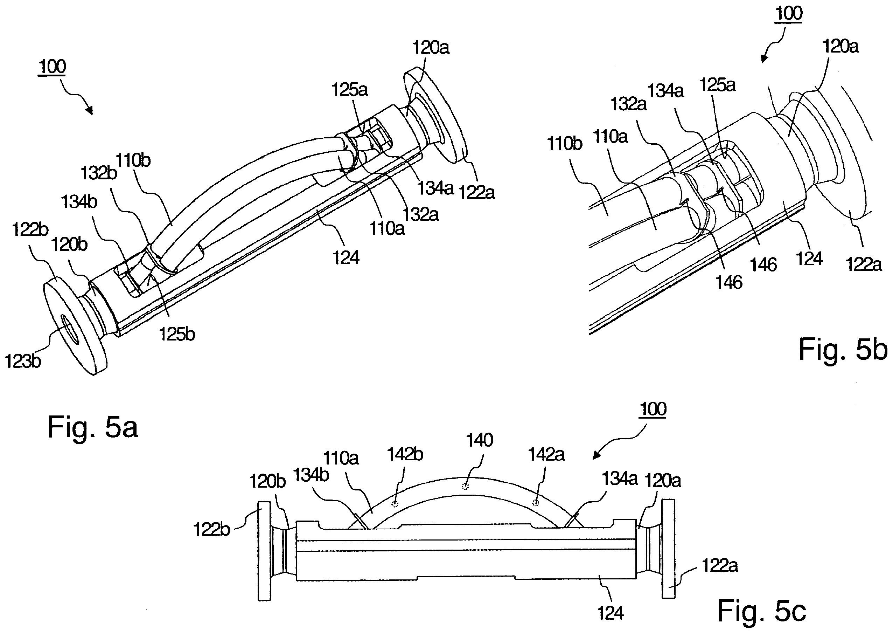

Hierbei wird das Betragsquadrat eines ortsabhängigen Bewegungsvektors (UY,UZ) über die Stirnfläche des Flansches 122 integriert, und das Integral wird mit der Stirnfläche normiert. Durch Radizieren dieses Wertes geteilt durch die Amplitude einer Sensorbewegung U_s in X-Richtung ist die Zielfunktion eine OBJ definiert, die zu minimieren ist. Die Sensorbewegung U_s ist

die Bewegung eines Schwingungssensors 142a, 142b, dessen Position entlang der Messrohre in Fig. 5c dargestellt ist.

Die Position p1 des inneren Kopplers 132 entlang der Messrohre steht nur eingeschränkt als Freiheitsgrad für die Minimierung der Zielfunktion OBJ zur Verfügung, da die Position p1 die freie Schwingungslänge der Messrohre festlegt und damit die Eigenfrequenz des die Messrohre umfassenden Oszillators sowie die Empfindlichkeit dφ/dṁ des CMD 100 wesentlich mitbestimmt, wobei der Winkel φ einen Phasenunterschied zwischen den in Fig. 5c dargestellten Positionen der Schwingungssensoren 142a, 142b des Oszillators beschreibt.

Die Position des äußeren Kopplers 134 ist damit zunächst der verbleibende Freiheitsgrad, mit dem die Zielfunktion OBJ beeinflusst werden kann. Wie in Fig. 2b dargestellt, hat die Funktion per Position p2 des zweiten Kopplers 132 entlang des Messrohrs tatsächlich einen Einfluss auf die Zielfunktion, und es lässt sich ein Minimum finden, welches beispielsweise etwa OBJ(p2) 0,3025% beträgt. Dieser Wert ist zwar nicht schlecht, er kann aber noch verbessert werden.

Fig 2c zeigt nun den Einfluss von Öffnungen einer Länge lc in den Kopplern 132, 134 auf die Zielfunktion OBJ(lc), wobei die gemäß Fig. 2b ermittelte optimale Position des zweiten Kopplers beibehalten wird. Die beiden Koppler sind gleich gestaltet und weisen jeweils die Symmetrie der Punktgruppe D_{2h}. Es zeigt sich dass die Zielfunktion OBJ(lc) bei etwa 30 mm ein Minimum aufweist welches hier etwa 0,0122% beträgt.

Die konkreten Abmessungen der Koppler und der Öffnungen sowie die damit erreichbaren Werte für die Zielfunktion OBJ sind selbstverständlich in Abhängigkeit anderer Parameter des CMD, wie Messrohrdurchmesser, Messrohrlänge, Bogenhöhe der Messrohre und Anzahl der Koppler, beispielsweise durch Simulation mittels FEM zu bestimmen.

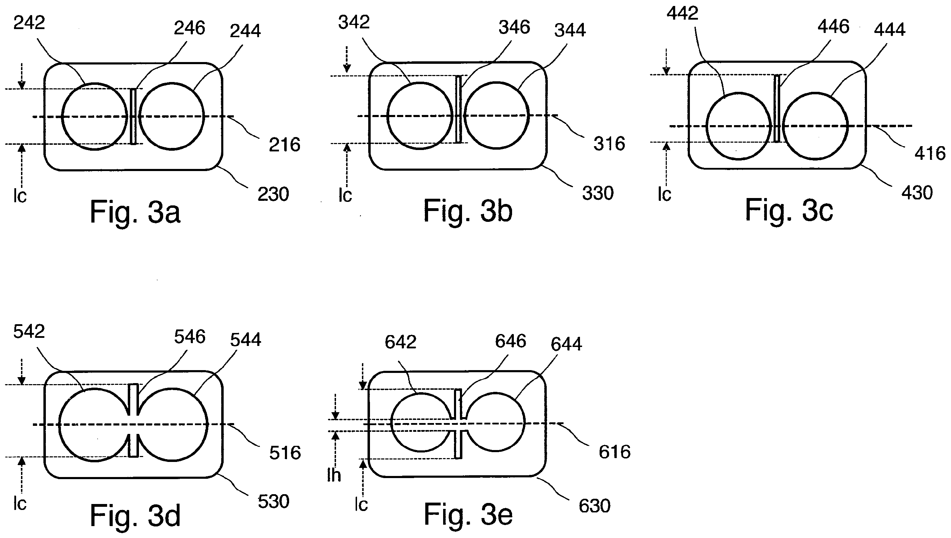

Fign. 3a-d zeigen Aufsichten auf Ausführungsbeispiele von Kopplern 230, 330, 430, 530, 530 eines erfindungsgemäßen CMD. Die Koppler weisen jeweils eine ebene Metallplatte auf und zwei Rohröffnungen 242, 244; 342, 344; 442, 444; 542, 544 für die zu koppelnden Messrohre, die sich durch die Metallplatte erstrecken, wobei zwischen den Rohröffnungen eine Öffnung mit einer Länge lc verläuft. Die Materialstärke der Metallplatte beträgt beispielsweise etwa drei Rohrwandstärken der zu koppelnden Messrohre. Die Messrohre werden beispielsweise mittels eines Hartlots in den Rohröffnungen fixiert.

Die dargestellten Koppler 230; 330; 430; 530; 630 unterscheiden sich jeweils hinsichtlich weiterer Gestaltungsmerkmale, die im Folgenden erläutert werden; beispielsweise durch Symmetrieabweichungen zur Kopplernormalenebene 216; 316; 416; 516; 616, welche gemäß der obigen Definition parallel zur größten Hauptträgheitsachse des Kopplers verläuft und in welcher die Kopplerebene und eine Verbindungslinie der Messrohrachsen zusammen fallen, wobei die Messrohrachsen in der Kopplerebene durch die Mittelpunkte der Rohröffnungen 242, 244; 342, 344; 442, 444; 542, 544; 642, 644 verlaufen.

Das in Fig. 3a gezeigte, erste Ausführungsbeispiel eines Kopplers 230 eines erfindungsgemäßen CMD weist eine Symmetrie der Punktgruppe $D_{2h}$ auf. Hier liegen demnach der Flächenschwerpunkt der Öffnung 246 und der Flächenschwerpunkt der Kopplerplatte in der Kopplernormalenebene 216.

Das in Fig. 3b gezeigte, zweite Ausführungsbeispiel eines Kopplers 330 eines erfindungsgemäßen CMD weist in Abweichung zu Fig. 3a eine Öffnung 346 auf, deren Flächenschwerpunkt außerhalb der Kopplernormalenabene 316 liegt.

Bei dem in Fig. 3c gezeigten, dritten Ausführungsbeispiel eines Kopplers 430 eines erfindungsgemäßen CMD sind in Abweichung zu Fig. 3a sowohl der Flächenschwerpunkt der Öffnung 446 als auch der Flächenschwerpunkt der eine Öffnung 346 außerhalb der Kopplernormalenebene 416 angeordnet.

Das in Fig. 3d gezeigte, vierte Ausführungsbeispiel eines Kopplers 530 eines erfindungsgemäßen CMD weist in Abweichung zu Fig. 3a eine Öffnung 546 auf, deren Flächenschwerpunkt außerhalb der Kopplernormalenebene 516 liegt. Weiterhin schneiden die Umfangskreise der Rohröffnungen 542, 544 in einem Überlappungsbereich die Öffnung 546, so dass die Öffnung 546 mit den Rohröffnungen verbunden ist. Die Länge des Überlappungsbereichs senkrecht zur Kopplernormalenebene beträgt beispielsweise nicht weniger als 10%, insbesondere nicht weniger als 20% und bevorzugt nicht weniger als 30% des Radius der Rohröffnungen 542, 544. Im montierten Zustand der Koppler in einem CMD, verlaufen Messrohre durch die Rohröffnungen, welche dann im Überlappungsbereich einen Randabschnitt der Öffnung bilden. In dem Überlappungsbereich bleiben die Messrohre frei von einem Lot.

Beim in Fig. 3e gezeigten, fünften Ausführungsbeispiel eines Kopplers 630 eines erfindungsgemäßen CMD ist - wie beim vierten Ausführungsbeispiel - die Öffnung 646 mit den Rohröffnungen verbunden. In Abweichung zu Fig. 3d weist hier die Öffnung 646 in einem zentralen Bereich eine Verbreiterung auf, die sich bis zu den Rohröffnungen 642, 644 erstreckt, so dass die Öffnung 546 mit den Rohröffnungen verbunden ist. Die Länge Ih der Verbreiterung senkrecht zur Kopplernormalenebene beträgt beispielsweise nicht weniger als 10%, insbesondere nicht weniger als 20% und bevorzugt nicht weniger als 30% des Radius der Rohröffnungen 642, 644.

Im montierten Zustand der Koppler in einem CMD, verlaufen Messrohre durch die Rohröffnungen, welche dann einen Randabschnitt der Öffnung bilden. In diesem Abschnitt bleiben die Messrohre frei von einem Lot.

Die anhand der Fign 3a-e dargestellten Designfreiheitsgrade, wie das Vorhandensein bzw. das Ausmaß einer Abweichung von der in Fig. 3a dargestellten Symmetrie oder das Vorhandensein bzw. das Ausmaß eines Überlappungsbereichs zwischen der Öffnung und den Umfangkreisen der Rohröffnungen, können beliebig kombiniert werden. Weiterhin können die Rohröffnungen auch von der Kreisform abweichende Querschnitte aufweisen, beispielsweise elliptische.

Die Abweichungen von der Symmetrie beim Design eines Kopplers und/oder Designunterschiede zwischen verschiedenen Kopplern ermöglichen weiterhin eine Minimierung der an den Kopplern auftretenden Spannungen, was zur Langzeitstabilität der Messeigenschaften des CMD beiträgt.

Die einander zugewandten Mantelflächensegmente der Messrohre weisen insbesondere nahe der Kopplernormalenebene im Schwingungszustand Spannungsmaxima auf. Eine Fügestelle in diesem Bereich, beispielsweise eine Lötverbindung ist daher ebenfalls großen Spannungen ausgesetzt, was zu deren Alterung beiträgt. Koppler, welche zur Öffnung offene Rohröffnungen aufweisen, vermeiden dieses Problem, da hier die Mantelflächensegmente, welche die starken Spannungen ausgesetzt sind, sich frei bewegen können.

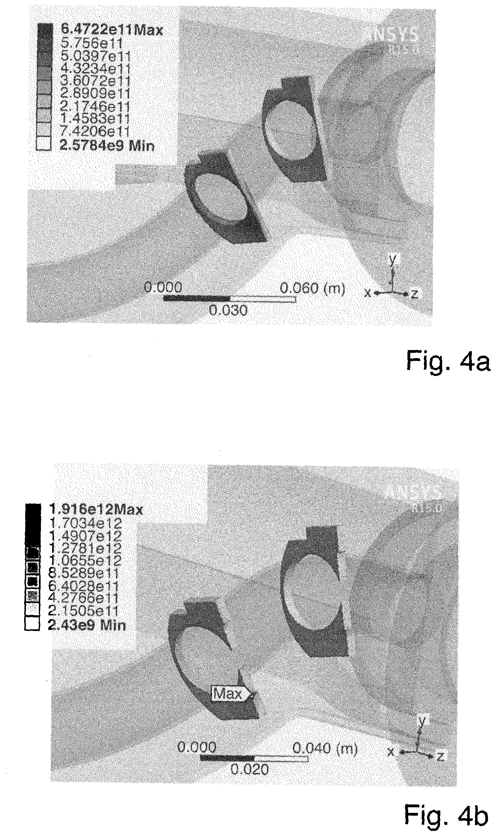

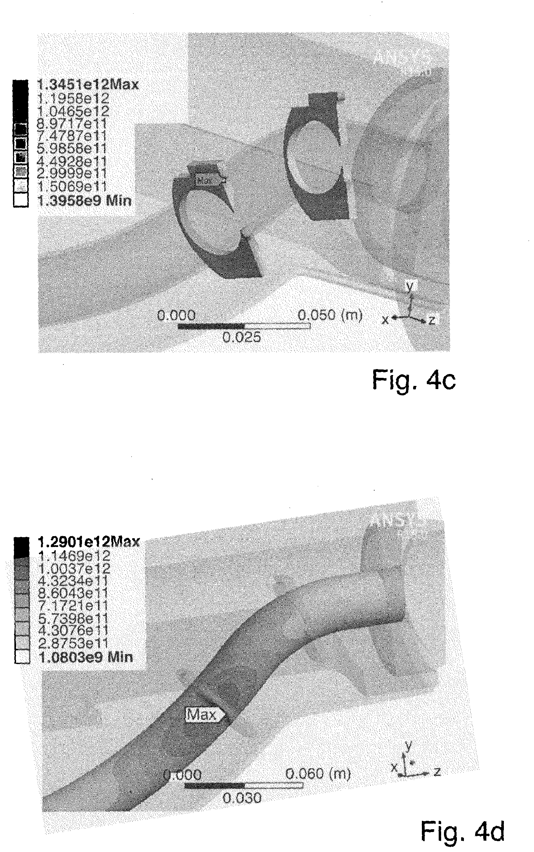

Fign 4a, 4b und 4c zeigen Simulationsergebnisse der mechanischen Spannungsverteilungen in den Kopplern eines CMD mit jeweils zwei einlassseitigen und zwei auslassseitigen Kopplern. Die Zahlenwerte sind jedoch nicht absolut zu betrachten, da sie mit extrem übertriebenen Schwingungsamplituden errechnet wurden. Im vorliegenden Fall kommt es lediglich auf einen Vergleich der relativen Werte an.

Bei den Kopplern eines CMD nach dem Stand der Technik gemäß Fig. 4a tritt das Spannungsmaximum am inneren Koppler nahe der Kopplernormalenebene auf und beträgt bei einer gegebenen Schwingungsamplitude der Messrohre beispielsweise etwa $6{,}5 \times 10^{11}$.

Das erfindungsgemäße CMD gemäß Fig. 4b weist Koppler mit Öffnungen auf, deren Flächenschwerpunkt jeweils in der Kopplernormalenebene liegen. Insofern, als hier die Koppelkräfte von der Umrandung der Öffnung des Kopplers aufgenommen werden müssen, ist es nicht überraschend, dass lokal größere Spannungen als am massiven Koppler aus Fig. 4a auftreten. Tatsächlich liegt ein Maximalwert vor, der mit etwa $1{,}9 \times 10^{12}$ knapp das Dreifache des Maximalwerts des massiven Kopplers beträgt. Die Spannungsspitze liegt am schmalseitigen Rand der Öffnung an der konvex verlaufenden Außenseite des Messrohrbogens.

Beim Ausführungsbeispiel gemäß Fig. 4c sind die Flächenschwerpunkte der Öffnungen des inneren und des äußeren Kopplers jeweils unterschiedlich weit in Richtung der konkav verlaufenden Innenseite des Messrohrbogens aus der Kopplernormalenebene verschoben, wodurch die Koppler an der Außenseite des Messrohrbogens steifer geworden sind. Dies führt im Ergebnis zu einer reduzierten Maximalspannung gegenüber den Kopplern mit symmetrisch gestalteter Öffnung. Diese reduzierte Maximalspannung tritt an der Schmalseite der Umrandung der Öffnung des inneren Kopplers auf, und sie beträgt mit gut $1,3 \times 10^{12}$ nur noch etwa 70% der Maximalspannung des massiven Kopplers des CMD aus Fig. 4b.

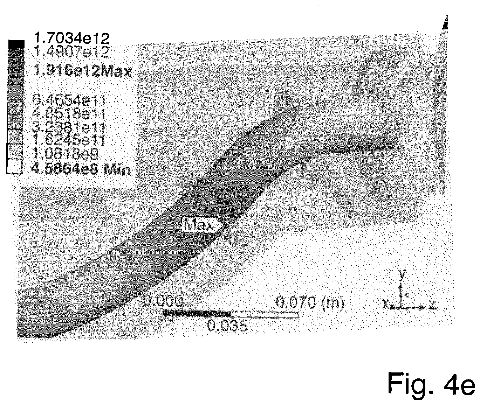

Fign 4d und 4e zeigen Simulationsergebnisse der mechanischen Spannungsverteilungen in den Messrohren eines CMD mit jeweils zwei einlassseitigen und zwei auslassseitigen Kopplern. Wie zuvor sind die Zahlenwerte nicht absolut zu betrachten.

Bei dem in Fig. 4d gezeigten CMD mit massiven Kopplern tritt das Spannungsmaximum der Messrohre in oder nahe der Kopplernormalenebene des inneren Kopplers auf der dem jeweils anderen Messrohr zugewandten Seite auf und beträgt bei einer gegebenen Schwingungsamplitude der Messrohre beispielsweise etwa $1,29 \times 10^{12}$.

Bei dem in Fig. 4e gezeigten CMD dessen Koppler Öffnungen aufweisen tritt das Spannungsmaximum der Messrohre ebenfalls in oder nahe der Kopplernormalenebene des inneren Kopplers auf der dem jeweils anderen Messrohr zugewandten Seite auf und beträgt bei gleicher Schwingungsamplitude nur noch $9,46 \times 10^{11}$ ist also um gut ein Viertel reduziert. Dies ist eine erhebliche Verbesserung.

Das in Fign. 5a, 5b und 5c dargestellte Ausführungsbeispiel eines erfindungsgemäßen CMD 100 umfasst zwei parallel geführte gebogene Messrohre 110a, 110b, die sich zwischen einem einlassseitigen Sammler 120a und einem auslassseitigen Sammler 120b erstrecken, und mit diesen fest verbunden sind, beispielsweise durch Einwalzen, Hartlöten oder Schweißen. Zwischen den Sammlern 120a, 120b erstreckt sich ein massives Trägerrohr 124, das mit beiden Sammlern fest verbunden ist, wodurch die Sammler 120a, 120b starr miteinander gekoppelt sind. Das Trägerrohr 124 weist an seiner Oberseite Öffnungen 125a, 125b durch welche die Messrohre 110a, 110b von den Sammlern aus dem Trägerrohr 124 heraus und wieder zurück geführt sind. Die Messrohre 110a, 110b sind einlassseitig und auslassseitig jeweils mit zwei Kopplern 132a, 134a, 132b, 134b verbunden, wobei die Koppler zwischen den Messrohren Öffnungen 146 aufweisen. Die Koppler 132a, 132b, 134a, 134b definieren Schwingungsknoten für die Messrohre. Zwischen den inneren Kopplern 132a, 132b können die Messrohre 110a, 110b frei schwingen, so dass durch die Position der inneren Koppler die Schwingungseigenschaften des durch die Messrohre 110a, 110b gebildeten Oszillators, insbesondere Eigenfrequenzen von Schwingungsmoden des Oszillators wesentlich mitbestimmt werden.

Zum Anregen von Schwingungen bezogen auf die Längsrichtung bzw. die Z-Achse in der Mitte des CMD 100 zwischen den Messrohren eine Erregeranordnung 140 vorgesehen, beispielsweise eine induktive Erregeranordnung, die beispielsweise eine Tauchspule an einem Messrohr und einen Tauchkörper gegenüberliegenden Messrohr umfasst. Zum Erfassen der Schwingungen der Messrohre sind in Längsrichtung symmetrisch zur Erregeranordnung 140 eine erste Sensoranordnung 142a und eine zweite Sensoranordnung 142b vorgesehen, die jeweils als induktive Anordnung mit einer Tauchspule an einem Rohr und einem Tauchkörper am anderen Rohr gestaltet sind. Einzelheiten dazu sind dem Fachmann bekannt, und brauchen hier nicht näher erläutert zu werden. (Im Sinne der Übersichtlichkeit wurden die Positionen der Erregeranordnung und der Sensoranordnungen lediglich in Fig. 5c dargestellt, und in Fign. 5a und 5b weggelassen).

Die Sammler 120a, 120b weisen endständig Flansche 122a, 122b auf, mittels derer das CMD in einer Rohrleitung zu installieren ist. Durch zentrale Öffnungen 123b in den Flanschen ist ein Massestrom durch den CMD 100, insbesondere dessen Rohrleitungen 110a, 110b zu führen ist, um den Massestrom zu messen.

Die Messrohre 110a, 110b sind einlassseitig und auslassseitig jeweils mit zwei Kopplern 132a, 134a, 132b, 134b verbunden, wobei die Koppler zwischen den Messrohren Öffnungen 146 aufweisen.

## Patentansprüche

1. Coriolis-Massedurchflussmessgerät bzw. Dichtemessgerät (100) umfassend:

mindestens zwei in der Ruhelage gebogen verlaufende Messrohre (110a, 110b), wobei die Messrohre Messrohrachsen aufweisen, welche spiegelsymmetrisch zu einer ersten Spiegelebene verlaufen, die sich zwischen den Messrohren (110a, 110b) erstreckt, mindestens eine Aktuatoranordnung (140) und mindestens eine Sensoranordnung (142a, 142b);
einlaufseitig und auslaufseitig jeweils einen Sammler (120a, 120a), wobei die Messrohre jeweils einlaufseitig und auslaufseitig mit einem Sammler (3) strömungstechnisch zusammengefasst sind, einen Trägerkörper (124), welcher den einlaufseitigen Sammler (120a) und den auslaufseitigen Sammler (120b) starr mit einander verbindet; und
einlaufseitig und auslaufseitig jeweils mindestens einen ersten plattenförmigen Koppler (132a, 134a) und einen zweiten plattenförmigen Koppler (132b, 134b)
wobei die Messrohre mittels der Koppler paarweise miteinander verbunden sind, um einen Oszillator zu bilden, wobei die Koppler jeweils zwei Rohröffnungen für die durch die Koppler verbundenen Messrohre aufweisen, durch welche die Messrohre geführt sind, wobei die Messrohre entlang ihres Umfangs zumindest abschnittsweise mit den Kopplern verbunden sind, wobei die Aktuatoranordnung (140) dazu eingerichtet ist, einen Biegeschwingungsnutzmode zwischen den beiden Messrohren des Oszillators anzuregen,

die Sensoranordnung (142a, 142b) dazu eingerichtet ist, Schwingungen des Oszillators zu erfassen,

wobei einlassseitig und auslassseitig jeweils zumindest der erste Koppler (132a, 134a) und der zweite Koppler (132b, 134b), zwischen den durch den Koppler verbundenen Messrohren (110a, 110b) eine durch einen geschlossenen Rand umgebene Öffnung (146) zum Beeinflussen der Schwingungseigenschaften des Oszillators aufweist,

**dadurch gekennzeichnet, dass** einlassseitig und auslassseitig jeweils ein erster der Koppler und ein zweiter der Koppler kopplerspezifische Kopplernormalenebenen aufweisen, die jeweils parallel zur größten Hauptträgheitsachse des jeweiligen Kopplers verlaufen, die senkrecht zur ersten Spiegelebene verlaufen, und die eine senkrecht zur ersten Spiegelebene verlaufende Verbindungslinie der Messrohrachsen (12a, 12b) innerhalb der Öffnung des jeweiligen Kopplers berühren,

wobei der erste Koppler einen ersten Masseschwerpunkt aufweist, der von seiner kopplerspezifischen Kopplmormalenebene um einen ersten Abstand beabstandet ist, wobei der zweite Koppler einen ersten Masseschwerpunkt aufweist, der von seiner kopplerspezifischen Kopplernormalenebene um einen zweiten Abstand beabstandet ist,

wobei der erste Abstand von dem zweiten Abstand abweicht, wobei die Abweichung nicht weniger als 5% insbesondere nicht weniger als 10% des kleineren der beiden Abstände beträgt.

2.  Coriolis-Massedurchflussmessgerät bzw. Dichtemessgerät (100) nach Anspruch 1, wobei die Öffnungen (146) in der ersten Spiegelebene eine Erstreckung von mindestens 30%, beispielsweise mindestens 50%, und insbesondere mindestens 70% des Durchmessers der Messrohre (110a, 110b) aufweisen.

3.  Coriolis-Massedurchflussmessgerät bzw. Dichtemessgerät (100) nach Anspruch 1 oder 2, wobei die Öffnungen in der ersten Spiegelebene eine Länge aufweisen, deren Quadrat nicht weniger als das Doppelte, beispielsweise nicht weniger als das Vierfache und insbesondere nicht weniger als das Achtfache der Fläche der Öffnung beträgt.

4.  Coriolis-Massedurchflussmessgerät bzw. Dichtemessgerät nach einem der Ansprüche 1 bis 3, wobei der Abstand der Messrohrachsen an der Position der Öffnungen nicht mehr als 1,5 Außendurchmesser der Messrohre, insbesondere nicht mehr als 1,3 Außendurchmesser und bevorzugt nicht mehr als 1,2 Außendurchmesser beträgt.

5.  Coriolis-Massedurchflussmessgerät bzw. Dichtemessgerät nach einem der vorhergehenden Ansprüche, wobei einlassseitig und auslassseitig jeweils zumindest die beiden inneren Koppler eines durch die Koppler verbundenen Messrohrpaars eine solche Öffnung aufweisen wobei die beiden inneren Koppler, die am weitesten vom jeweiligen Sammler entfernten Koppler sind.

6.  Coriolis-Massedurchflussmessgerät bzw. Dichtemessgerät (1) nach einem der vorhergehenden Ansprüche, wobei einlassseitig und auslassseitig jeweils mindestens eine Öffnung eines Kopplers bezogen auf die Kopplernormalenebene (16), asymmetrisch ist.

7.  Coriolis-Massedurchflussmessgerät bzw. Dichtemessgerät (1) nach Anspruch 6, wobei der Abstand der äußersten Erstreckung der mindestens einen Öffnung in der ersten Spiegelebene (Syz) von der Kopplernormalenebene (16) auf einer ersten Seite der Kopplernormalenebene geringer ist als auf einer zweiten Seite der Kopplernormalenebene.

8.  Coriolis-Massedurchflussmessgerät bzw. Dichtemessgerät (1) nach einem der vorhergehenden Ansprüche, wobei der Abstand zwischen der äußersten Erstreckung der Öffnung in der ersten Spiegelebene und einer äußersten Erstreckung des Kopplers in der ersten Spiegelebene auf einer ersten Seite der Kopplernormalenebene geringer ist als auf einer zweiten Seite der Kopplernormalenebene.

9.  Coriolis-Massedurchflussmessgerät bzw. Dichtemessgerät (1) nach einem der vorhergehenden Ansprüche, wobei einlassseitig und auslassseitig jeweils mindestens ein Koppler einen Masseschwerpunkt aufweist, der von der Kopplernormalenebene um einen Abstand entfernt ist, wobei der Abstand beispielsweise nicht weniger als 4%, insbesondere nicht weniger als 8% des Abstands der Messrohrachsen in der Kopplernormalenebene beträgt.

10. Coriolis-Massedurchflussmessgerät bzw. Dichtemessgerät (1) nach einem der vorhergehenden Ansprüche, wobei der erste Koppler eine erste Öffnung aufweist, wobei der zweite Koppler eine zweite Öffnung aufweist, und wobei sich die erste Öffnung von der zweiten Öffnung in mindestens einem Parameter der folgenden Parameter unterscheidet: Fläche der Öffnung, Länge der Öffnung, Abstand des Flächenschwerpunkts der Öffnung zur jeweiligen Kopplernormalenebene.

11. Coriolis-Massedurchflussmessgerät bzw. Dichtemessgerät (1) nach einem der vorhergehenden Ansprüche, wobei jeweils einlassseitig und auslassseitig mindestens eine Öffnung durch Randabschnitte begrenzt ist die in einem Abschnitt zwischen den Messrohren beidseitig durch die Messrohre gebildet sind.

12. Coriolis-Massedurchflussmessgerät bzw. Dichtemessgerät (1) nach einem der vorhergehenden Ansprüche, wobei die durch die Messrohre gebildeten Randabschnitte senkrecht zur größten Hauptträgheitsachse des jeweiligen Kopplers jeweils eine Länge aufweisen, die nicht weniger als 10%, insbesondere nicht weniger als 20% und bevorzugt nicht weniger als 30% des Radius des Messrohrs beträgt, welches den jeweiligen Randabschnitt der Öffnung bildet.

13. Coriolis-Massedurchflussmessgerät bzw. Dichtemessgerät (1) nach einem der vorhergehenden Ansprüche, wobei die plattenförmigen Körper eine Materialstärke aufweisen, die nicht mehr als das Vierfache, insbesondere nicht mehr als das Dreifache der Wandstärke der Messrohre beträgt.

**Claims**

1. Coriolis mass flowmeter or density meter (100) comprising:

   at least two measuring tubes (110a, 110b) which are curved in the rest position,
   wherein the measuring tubes have measuring tube axes which are in mirror symmetry to a first mirror plane which extends between the measuring tubes (110a, 110b),
   at least one actuator arrangement (140) and at least one sensor arrangement (142a, 142b);
   a collector (120a, 120b) on both the inlet side and the outlet side, wherein the measuring tubes are grouped in terms of flow with a collector (3) on the inlet side and on the outlet side, a carrier body (124), which connects the collector on the inlet side (120a) and the collector on the outlet side (120b) in a rigid manner; and
   at least a first plate-like coupler (132a, 134a) and a second plate-like coupler (132b, 134b) on both the inlet side and the outlet side,
   wherein the measuring tubes are interconnected in pairs by means of the couplers in order to form an oscillator, wherein the couplers each have two tube openings for the measuring tubes that are connected by means of the couplers,
   wherein the measuring tubes are at least partially connected to the couplers along their circumference,
   wherein the actuator arrangement (140) is configured to excite a flexural vibration useful mode between the two measuring tubes of the oscillator,
the sensor arrangement (142a, 142b) is configured to measure vibrations of the oscillator,
wherein on the inlet side and on the outlet side at least the first coupler (132a, 134a) and the second coupler (132b, 134b) each have an opening (146) between the measuring tubes (110a, 110b), which are connected via the coupler, said opening being surrounded by a closed perimeter and designed to influence the vibration properties of the oscillator,
**characterized in that**
on both the inlet side and the outlet side a first of the couplers and a second of the couplers have coupler-specific coupler normal planes which are parallel to the largest principal axis of inertia of the individual coupler, which are perpendicular to the first mirror plane, and which touch a connecting line of the measuring tube axes (12a, 12b) inside the opening of the coupler in question, wherein said connecting line is perpendicular to the first mirror plane,
wherein the first coupler has a first center of mass which is spaced away from its coupler-specific coupler normal plane by a first distance,
wherein the second coupler has a first center of mass, which is spaced away from its coupler-specific coupler normal plane by a second distance,
wherein the first distance is different from the second distance, wherein the difference is not less than 5 %, particularly not less than 10 % of the smaller of the two distances.

2. Coriolis mass flowmeter or density meter (100) as claimed in Claim 1, wherein the openings (146) in the first mirror plane have an extension of at least 30 %, for example at least 50 %, and particularly of at least 70 % of the diameter of the measuring tubes (110a, 110b).

3. Coriolis mass flowmeter or density meter (100) as claimed in Claim 1 or 2, wherein the openings in the first mirror plane have a length the square of which is not less than double, for example not less than four times and particularly not less than eight times the surface of the opening.

4. Coriolis mass flowmeter or density meter as claimed in one of the Claims 1 to 3, wherein the distance of the measuring tube axes at the position of the openings is not more than 1.5 times the outer diameter of the measuring tubes, particularly not more than 1.3 times the outer diameter and preferably not more than 1.2 times the outer diameter.

5. Coriolis mass flowmeter or density meter as claimed in one of the previous claims, wherein - on the inlet side and on the outlet side - at least the two inner couplers of a pair of measuring tubes connected by means of the couplers feature such an opening, wherein the two inner couplers are the couplers located farthest away from the particular collector.

6. Coriolis mass flowmeter or density meter (1) as claimed in one of the previous claims, wherein - on the inlet side and on the outlet side - at least one opening of a coupler is asymmetrical in relation to the coupler normal plane (16).

7. Coriolis mass flowmeter or density meter (1) as claimed in 6, wherein the distance of the outermost extension of the at least one opening in the first mirror plane (Syz) of the coupler normal plane (16) is smaller on a first side of the coupler normal plane than on a second side of the coupler normal plane.

8. Coriolis mass flowmeter or density meter (1) as claimed in one of the previous claims, wherein the distance between the outermost extension of the opening in the first mirror plane and an outermost extension of the coupler in the first mirror plane is smaller on a first side of the coupler normal plane than on a second side of the coupler normal plane.

9. Coriolis mass flowmeter or density meter (1) as claimed in one of the previous claims, wherein - on the inlet side and on the outlet side - at least one coupler has a center of mass which is spaced away from the coupler normal plane by a distance, wherein the distance is, for example, not less than 4 %, particularly not less than 8 % of the distance of the measuring tube axes in the coupler normal plane.

10. Coriolis mass flowmeter or density meter (1) as claimed in one of the previous claims, wherein the first coupler has a first opening, wherein the second coupler has a second opening, and wherein the first opening differs from the second opening with regard to at least one parameter of the following parameters: surface of the opening, length of the opening, distance between the centroid of the area of the opening and the individual coupler normal plane.

11. Coriolis mass flowmeter or density meter (1) as claimed in one of the previous claims, wherein - on the inlet side and on the outlet side - at least one opening is limited by marginal sections which are formed in a section between the measuring tubes by the measuring tubes on both sides.

12. Coriolis mass flowmeter or density meter (1) as claimed in one of the previous claims, wherein the marginal sections formed by the measuring tubes and perpendicular to the largest principal axis of inertia of the particular coupler have a length that is not less than 10 %, particularly not less than 20 % and preferably not less than 30 % of the radius of the measuring tube which forms the particular marginal section of the opening.

13. Coriolis mass flowmeter or density meter (1) as claimed in one of the previous claims, wherein the plate-like bodies have a material thickness that is not more than four times, particularly not more than three times the wall thickness of the measuring tubes.

## Revendications

1. Débitmètre massique Coriolis ou densimètre (100) comprenant :

au moins deux tubes de mesure (110a, 110b) présentant une allure courbe dans la position de repos,
les tubes de mesure présentant des axes de tube de mesure qui sont en symétrie miroir par rapport à un premier plan miroir, qui s'étend entre les tubes de mesure (110a, 110b),
au moins un circuit d'actionneur (140) et au moins un circuit de capteur (142a, 142b) ;
un collecteur (120a, 120b) respectivement côté entrée et côté sortie, les tubes de mesure étant regroupés en terme d'écoulement respectivement côté entrée et côté sortie avec un collecteur (3), un corps support (124), qui relie entre eux le collecteur côté entrée (120a) et le collecteur côté sortie (120b) de façon rigide ; et
respectivement côté entrée et côté sortie, au moins un premier coupleur (132a, 134a) en forme de plaque et un deuxième coupleur (132b, 134b) en forme de plaque,
les tubes de mesure étant reliés par paire au moyen des coupleurs, afin de former un oscillateur, les coupleurs présentant chacun deux ouvertures pour les tubes de mesure reliés à travers les coupleurs, ouvertures à travers lesquelles les tubes de mesure sont acheminés,
les tubes de mesure étant reliés au moins partiellement avec les coupleurs le long de leur circonférence,
le circuit d'actionneur (140) étant configuré de telle sorte à exciter un mode utile de vibrations de flexion entre les deux tubes de mesure de l'oscillateur,
le circuit de capteur (142a, 142b) étant configuré de telle sorte à mesurer les vibrations de l'oscillateur,
au moins le premier coupleur (132a, 134a) et le deuxième coupleur (132b, 134b) présentant, respectivement côté entrée et côté sortie, une ouverture (146) entre les tubes de mesure (110a, 110b) reliés à travers les coupleurs, laquelle ouverture est entourée d'un bord fermé et laquelle ouverture est destinée à influencer les caractéristiques de vibration de l'oscillateur, **caractérisé**

**en ce que**, respectivement côté entrée et côté sortie, un premier parmi les coupleurs et un deuxième parmi les coupleurs présentant des plans normaux de coupleur spécifiques aux coupleurs, lesquels plans sont chacun parallèles au plus grand axe d'inertie principal du coupleur respectif et qui sont perpendiculaires au premier plan miroir, et qui touchent une ligne de liaison des axes de tube de mesure (12a, 12b) à l'intérieur de l'ouverture du coupleur respectif, laquelle ligne est perpendiculaire au premier plan miroir,

le premier coupleur présentant un centre de gravité de masse, qui se situe à une première distance par rapport à son plan normal de coupleur spécifique au coupleur, le deuxième coupleur présentant un centre de gravité de masse, qui se situe à une deuxième distance par rapport à son plan normal de coupleur spécifique au coupleur,

la première distance différant de la deuxième distance, la différence n'étant pas inférieure à 5 %, notamment pas inférieure à 10 % de la plus petite des deux distances.

2. Débitmètre massique Coriolis ou densimètre (100) selon la revendication 1, pour lequel les ouvertures (146) dans le premier plan miroir présentent une étendue d'au moins 30 %, par exemple d'au moins 50 %, et notamment d'au moins 70 % du diamètre des tubes de mesure (110a, 110b).

3. Débitmètre massique Coriolis ou densimètre (100) selon la revendication 1 ou 2, pour lequel les ouvertures dans le premier plan miroir présente une longueur, dont le carré n'est pas inférieur à deux fois, par exemple pas inférieur à quatre fois et notamment pas inférieur à huit fois la surface de l'ouverture.

4. Débitmètre massique Coriolis ou densimètre selon l'une des revendications 1 à 3, pour lequel la distance des axes de tube de mesure sur la position des ouvertures n'est pas supérieure à 1,5 fois le diamètre extérieur des tubes de mesure, notamment pas supérieure à 1,3 fois le diamètre extérieur et de préférence pas supérieure à 1,2 fois le diamètre extérieur.

5. Débitmètre massique Coriolis ou densimètre selon l'une des revendications précédentes, pour lequel au moins les deux coupleurs intérieurs d'une paire de tubes de mesure reliés à travers les coupleurs présentent, respectivement côté entrée et côté sortie, une telle ouverture, les deux coupleurs intérieurs étant les coupleurs situés le plus loin du collecteur respectif.

6. Débitmètre massique Coriolis ou densimètre (1) selon l'une des revendications précédentes, pour lequel au moins une ouverture, respectivement côté entrée et côté sortie, d'un coupleur est asymétrique par rapport au plan normal de coupleur (16).

7. Débitmètre massique Coriolis ou densimètre (1) selon la revendication 6, pour lequel la distance de l'étendue extérieure de l'au moins une ouverture dans le premier plan miroir (Syz) du plan normal de coupleur (16) est inférieure sur un premier côté du plan normal de coupleur à celle sur un deuxième côté du plan normal de coupleur.

8. Débitmètre massique Coriolis ou densimètre (1) selon l'une des revendications précédentes, pour lequel la distance entre l'étendue extérieure de l'ouverture dans le premier plan miroir et une étendue extérieure du coupleur dans le premier plan miroir est inférieure sur un premier côté du plan normal de coupleur à celle sur un deuxième côté du plan normal de coupleur.

9. Débitmètre massique Coriolis ou densimètre (1) selon l'une des revendications précédentes, pour lequel au moins un coupleur présente, respectivement côté entrée et côté sortie, une centre de gravité de masse, qui se trouve à une distance du plan normal de coupleur, la distance n'étant par exemple pas inférieure à 4 %, notamment pas inférieure à 8 % à la distance des axes de tube de mesure dans le plan normal de coupleur.

10. Débitmètre massique Coriolis ou densimètre (1) selon l'une des revendications précédentes, pour lequel le premier coupleur présente une première ouverture, le deuxième coupleur présente une deuxième ouverture et la première ouverture se distingue de la deuxième ouverture par au moins un paramètre parmi les paramètres suivants : surface de l'ouverture, longueur de l'ouverture, distance entre le centre de gravité de la surface de l'ouverture et le plan normal de coupleur.

11. Débitmètre massique Coriolis ou densimètre (1) selon l'une des revendications précédentes, pour lequel au moins une ouverture, respectivement côté entrée et côté sortie, est limitée par des parties marginales, qui sont formées dans une partie située entre les tubes de mesure, des deux côtés à travers les tubes de mesure.

12. Débitmètre massique Coriolis ou densimètre (1) selon l'une des revendications précédentes, pour lequel les parties marginales formées par les tubes de mesure présentent, perpendiculairement au plus grand axe d'inertie principal du coupleur respectif, une longueur qui n'est pas inférieure à 10 %, notamment pas inférieure à 20 % et de préférence pas inférieure à 30 % du rayon du tube de mesure, qui forme la partie marginale respective de l'ouverture.

13. Débitmètre massique Coriolis ou densimètre (1) selon l'une des revendications précédentes, pour lequel les corps en forme de plaque présentent une épaisseur de matériau, qui n'est pas supérieure à quatre fois, notamment pas supérieure à trois fois l'épaisseur de paroi des tubes de mesure.

Fig. 1a

Fig. 1b

Fig. 1c

Fig. 1d

EP 3 237 784 B1

Fig. 2a

Fig. 2b

Fig. 2c

Fig. 3a

Fig. 3b

Fig. 3c

Fig. 3d

Fig. 3e

EP 3 237 784 B1

Fig. 4a

Fig. 4b

1.3451e12Max
1.1958e12
1.0465e12
8.9717e11
7.4787e11
5.9858e11
4.4928e11
2.9999e11
1.5069e11
1.3958e9 Min

0.000    0.050 (m)
0.025

Fig. 4c

1.2901e12Max
1.1469e12
1.0037e12
4.3234e11
8.6043e11
7.1721e11
5.7398e11
4.3076e11
2.8753e11
1.0803e9 Min

Max

0.000    0.060 (m)
0.030

Fig. 4d

Fig. 4e

Fig. 5a

Fig. 5b

Fig. 5c

EP 3 237 784 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011006971 A1
- DE 102011006919 A1
- US 20130319134 A1
- US 8281668 B2
- US 6415668 B1
- US 5370002 A
- US 20150033874 A1
- WO 2013149817 A1